# EUROPÄISCHE PATENTANMELDUNG

(11) **EP 4 841 239 A1**
(43) Veröffentlichungstag der Anmeldung: **18.11.2026**
(21) Anmeldenummer: 25176839.6
(22) Anmeldetag: 15.05.2025
(51) Int. Cl.: G01N 21/05, G01N 21/65, G01J 3/44, G01N 21/03

(54) **OPTISCHE RAMAN-MESSANORDNUNG, ZUGEHÖRIGE SPEZIFISCHE VERWENDUNGEN UND RAMAN-MESSVERFAHREN**

(71) Anmelder: Hellma GmbH & Co. KG, 79379 Müllheim (DE)
(72) Erfinder: MAYER, Lutz, 79299 Wittnau (DE); LACHER, Yannis, 79424 Auggen (DE); MANDAL, Oliver, 79379 Müllheim (DE)
(74) Vertreter: Mertzlufft-Paufler, Cornelius

(57) **Zusammenfassung**

Es wird eine optische Messanordnung (1) vorgeschlagen, die eine hochsensitive Raman-Messung eines Fluids (4) erlaubt, welches vorzugsweise in einer Fluidzelle (11) vorgehalten wird. Die Fluidzelle (11) kann dabei innerhalb eines optischen Resonators (2) angeordnet sein, ist aber separat von den Resonator-Spiegeln (8a, 8b) des Resonators (2) ausgestaltet, wobei eine separate Lichtquelle (3) Anregungslicht (5) bereitstellt, um eine optische Resonanzerhöhung innerhalb des Resonators (2) und so eine hohe Intensität an Raman-gestreutem Sekundärlicht (6) und damit ein hohes Raman-Signal zu erzeugen. Mithilfe eines Aktuators (19) wird dabei die Resonanzerhöhung aktiv stabilisiert (Vgl. Fig. 1).

## Beschreibung

Die Erfindung betrifft eine optische Messanordnung, im Folgenden prägnant als "Raman-Messanordnung" bezeichnet, die dazu eingerichtet und vorgesehen ist, Sekundärlicht zu detektieren, welches an einem Fluid Raman-gestreut wird. Die erfindungsgemäße Raman-Messanordnung kann dabei insbesondere als Teil einer stationären Messzelle ausgestaltet sein, die eine optische Vermessung und/oder Überwachung eines Fluidstroms, also zum Beispiel eines Prozessgases oder eines Abgases oder eines Flüssigkeitsstroms, erlaubt. Es können aber auch kleinere (insbesondere statische) Fluid-Proben vermessen werden. Ferner können erfindungsgemäße Raman-Messanordnungen bei entsprechender Miniaturisierung auch in mobilen Messsonden zum Einsatz kommen. Die Erfindung betrifft ferner spezifische Verwendungen dieser Messanordnung und ein Raman-Messverfahren. Es sei bereits an dieser Stelle erwähnt, dass sich erfindungsgemäße Messanordnungen grundsätzlich auch einsetzen lassen, um Fluoreszenzwellenlängen zu detektieren, die aufgrund entsprechender optischer Anregung (mit Hilfe der erfindungsgemäßen Messanordnung) von dem zu vermessenden Fluid emittiert werden. Dabei kann es auch zur Emission von mehreren Fluoreszenzwellenlängen kommen, die dann allesamt mit der Messanordnung detektiert werden können.

Die Erfindung ist somit zum Einsatz im Bereich der Raman- und/oder der Fluoreszenz-Messtechnik vorgesehen, insbesondere zur qualitativen und/oder quantitativen Analyse von Zusammensetzungen von Fluiden wie Flüssigkeiten oder Gasen. Beispielsweise kann die Erfindung in der Prozesstechnik zur quantitativen Bestimmung von bekannten Inhaltsstoffen eines zu vermessenden Fluids eingesetzt werden.

Bei einer Raman-Messung werden Molekül-Schwingungen/- Rotationen des untersuchten Fluids mittels einer Wellenlänge λ_{A} (Anregungslicht) optisch angeregt. Hierdurch kommt es zu einer optischen Sekundäremission (Sekundärlicht) von wenigstens einer zweiten zu messenden Messwellenlänge λ_{M}, die von der Anregungswellenlänge abweicht. Gerade beim Messen von Gasen mit sehr geringer optischer Dichte (OD) besteht hierbei das grundlegende Problem, dass das Raman-Signal vergleichsweise klein ausfällt, sodass oftmals ein schlechtes Signal-RauschVerhältnis ("signal-to-noise-ratio" = SNR) erhalten wird. Denn schon alleine aufgrund der geringen Moleküldichte in Gasen ist der effektive Wirkungsquerschnitt für den Raman-Effekt extrem klein.

Hierzu gibt es bereits Ansätze, mit entsprechend aufwändiger Elektronik das SNR zu verbessern, wobei auch Photomultiplier eingesetzt werden oder Sensoren, die in der Lage sind, einzelne Photonen zu messen (single photon counting). Daneben gibt es alternative Ansätze, das Problem des geringen SNR durch Verlängerung der "optischen Pfadlänge" und ggf. auch durch eine Erhöhung der optischen Leistungsdichte zu lösen, beispielsweise mittels sogenannter "Mehrfach-Reflexionszellen", sodass ein anregender Lichtstrahl ein zu untersuchendes Messvolumen an Gas mehrfach durchläuft.

Von diesem technischen Hintergrund ausgehend, hat es sich die Erfindung zur Aufgabe gemacht, eine optische Messanordnung und ein Messverfahren bereitzustellen, die eine genaue und hochsensitive Raman-Messung von Fluiden, insbesondere von geringer Moleküldichte, ermöglichen.

Zur Lösung dieser Aufgabe sind erfindungsgemäß bei einer optischen Messanordnung die Merkmale von Anspruch 1 vorgesehen. Insbesondere wird somit erfindungsgemäß zur Lösung der Aufgabe bei einer Raman-Messanordnung der eingangs genannten Art vorgeschlagen, dass diese folgende Komponenten umfasst: einen optischen Resonator, der zwei (sich gegenüberliegende) Resonator-Spiegel aufweist; eine (separate) Lichtquelle (vorzugsweise in Form eines Lasers), die außerhalb des Resonators angeordnet ist und ferner dazu eingerichtet ist, ein kohärentes und monochromatisches Anregungslicht einer Wellenlänge λ_{A} zu erzeugen und in den Resonator einzukoppeln; und wenigstens ein Detektor zur Detektion des Sekundärlichts;

Erfindungsgemäß ist dabei zur Lösung der Aufgabe vorgesehen, dass wenigstens einer der beiden Resonator-Spiegel mit Hilfe eines ansteuerbaren Aktuators aktiv verstellbar ist. Denn auf diese Weise kann die optische Resonanz und die hieraus resultierende Signalverstärkung optimal eingestellt werden.

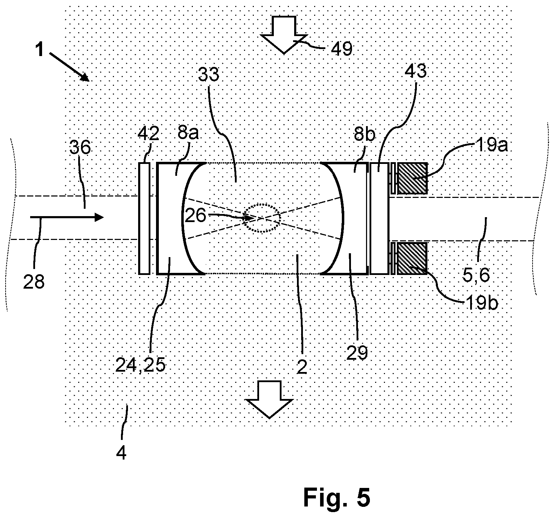

Soll beispielsweise ein Gasstrom mit der Messanordnung vermessen werden, so kann die gesamte Messanordnung als kompakte Einheit innerhalb des Gasstroms platziert werden (Vgl. Fig. 5), sodass der Gasstrom auch den Resonatorraum zwischen den Spiegeln flutet/befüllt. In diesem Fall kann der Gasstrom beispielsweise kontinuierlich mit der Messanordnung vermessen werden, um eine Überwachung zu implementieren. Dies bietet sich beispielsweise auch an, wenn eine Raumluftmessung mit der Messanordnung implementiert werden soll.

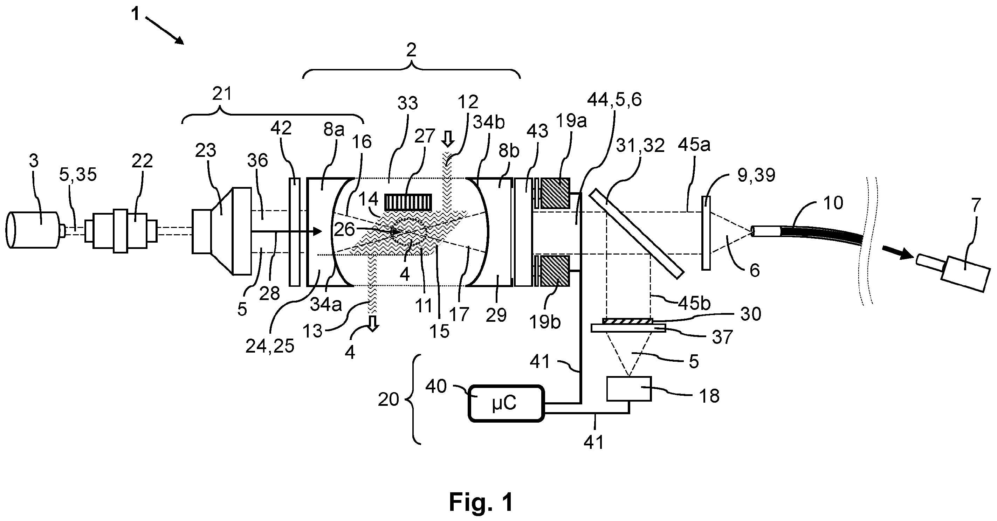

Sollen hingegen kleinere Mengen an flüssigen oder gasförmigen Fluiden vermessen werden, so ist es vorteilhaft, wenn die Messanordnung eine eigene Fluidzelle zur Aufnahme eines optisch zu vermessenden Fluidvolumens umfasst (vgl. z.B. die Figuren 1-4). Diese Fluidzelle kann vorzugsweise in Form einer Küvette, bevorzugt aus Glas (z.B. Quarzglas, Saphir, Calciumfluorid, Zinkselenid, beschichtetes Quarzglas), ausgestaltet sein. Während der Messung wird in diesem Fall das Fluid in der Fluidzelle vorgehalten. Die Fluidzelle muss dabei zumindest in denjenigen Bereichen, durch welche das Anregungslicht durch die Fluidzelle hindurchtreten sowie das erzeugte Sekundärlicht aus der Fluidzelle austreten soll, transparent sein. In den übrigen Bereichen bietet sich hingegen eine intransparente Ausgestaltung an, um störende Einflüsse von externem Licht oder von Streulicht möglichst gering zu halten. Somit kann die Fluidzelle auch aus Metall oder Kunststoff gefertigt sein, dann z.B. mit transparenten Glasfenstern.

Gemäß einer ersten möglichen Ausgestaltung kann dabei vorgesehen sein, dass die Fluidzelle als separates Bauteil innerhalb des Resonators so angeordnet ist, dass das im Resonator hin- und herlaufende Anregungslicht das (in der Fluidzelle vorgehaltene) Fluid mehrfach durchläuft. Eine solche Ausgestaltung kann vorteilhaft sein, wenn ein flüssiges Fluid vermessen werden soll. Denn so kann beispielsweise der Aktuator getrennt vom Fluid auf den Resonator-Spiegel einwirken, was z.B. zur Vermeidung von Korrosion bei bestimmten Fluiden vorteilhaft sein kann.

Wenn die Fluidzelle als separates Bauteil ausgestaltet ist, ist es besonders vorteilhaft, wenn diese (zerstörungsfrei) herausnehmbar / ausbaubar innerhalb des Resonatorraums angeordnet ist. Zu diesem Zweck kann die Messanordnung insbesondere ein Montagemittel umfassen, welches einen schnellen Ein- und Ausbau der Fluidzelle und eine präzise Fixierung einer Position der Fluidzelle innerhalb des Resonatorraums erlaubt. Dies ermöglicht nicht nur einen einfachen Austausch der Fluidzelle, beispielsweise bei Verschmutzung, sondern insbesondere ist es so möglich, temporär anstelle der Fluidzelle eine Referenz-Fluidzelle an derselben Stelle innerhalb des Resonatorraums anzuordnen. Die Referenz-Fluidzelle kann bekannte optische Eigenschaften haben, die es erlauben, eine Referenz- oder Testmessung durchzuführen und so die korrekte Funktionalität der optischen Messanordnung zu überprüfen.

Gemäß einer zweiten möglichen Ausgestaltung, die sich insbesondere bei der Vermessung von gasförmigen Fluiden anbieten kann, ist hingegen vorgesehen, dass mindestens der Resonator (also insbesondere dessen beide Resonator-Spiegel) innerhalb der Fluidzelle angeordnet ist (bzw. sind). Beispielsweise kann ein bestimmtes Gasvolumen, welches in der Fluidzelle bei der Messung vorgehalten wird, den Resonatorraum zwischen den beiden Resonator-Spiegeln ausfüllen und auf diese Weise mit dem zwischen den Spiegeln hin- und her laufenden Anregungslicht wechselwirken. Je nach Ausgestaltung kann sich dabei auch der erwähnte Aktuator ebenfalls innerhalb der Fluidzelle befinden oder aber außerhalb von dieser angeordnet sein. Im letzteren Fall kann der Aktuator von außen durch eine Wandung der Fluidzelle hindurch den Spiegel verstellen und die entsprechende Durchführung durch die Wandung kann abgedichtet sein, um ein Entweichen des Fluids zu verhindern. Der Resonator einer erfindungsgemäßen Messanordnung kann somit insbesondere innerhalb einer gasführenden Zelle/Kavität platziert sein.

Wie eingangs erläutert, weist das Sekundärlicht (wenigstens) eine Raman-Wellenlänge λ_{R} auf, die von der Wellenlänge λ_{A} des Anregungslichts abweicht, wobei die jeweilige Raman-Wellenlänge λ_{R} kleiner oder aber größer sein kann als die Wellenlänge λ_{A}. Im Allgemeinen wird, je nach verwendetem Fluid, das Sekundärlicht polychromatisch sein, weil eine Vielzahl an Raman-Wellenlängen λ_{Ri} durch unelastische Streuung des Anregungslichts an Molekülen des (gasförmigen oder flüssigen) Fluids erzeugt werden.

Unter einem "optischer Resonator" kann hier eine Anordnung von reflektierenden optischen Elementen (die Resonator-Spiegel) verstanden werden, die es ermöglicht, das eingekoppelte Anregungslicht möglichst oft zu reflektieren, um so eine Überhöhung der elektromagnetischen Feldstärke innerhalb des Resonators zu erreichen. Der hier verwendete Begriff "Resonator-Spiegel" ist somit als technischer Oberbegriff zu verstehen, denn ein solcher kann beispielsweise auch mit Hilfe eines Prismas oder eines anderen zur Strahlumlenkung geeigneten Elements realisiert sein. Ferner sind zahlreiche wirkungsvolle Spiegelgeometrien (plan-parallel / konfokal / hemisphärisch / konkav-konvex) im Stand-der-Technik vorbekannt. Die Resonator-Spiegel, die in Bezug auf die Wellenlänge λ_{A} einen Reflexionsgrad von 99% aufweisen können, sind teilweise für das Anregungslicht und für das Sekundärlicht durchlässig, sodass sowohl Anregungslicht als auch Sekundärlicht aus dem Resonator austreten kann. Die Resonator-Spiegel können insbesondere mittels reflektierender Beschichtungen, **z.B.** aufgebracht auf eine plankonkave Linse, realisiert sein. Somit kann einer der beiden (jeweils teildurchlässigen) Resonator-Spiegel als Einkoppel-Spiegel fungieren, um Anregungslicht in den Resonator einzukoppeln, während der andere Resonator-Spiegel als Auskoppel-Spiegel fungiert, um Anregungslicht aus dem Resonator auszukoppeln.

Unter einem Fluid kann hier insbesondere eine Flüssigkeit oder ein Gas verstanden werden.

Vorteilhaft an dieser erfindungsgemäßen Ausgestaltung der Messanordnung ist zunächst die hohe Energiedichte an anregenden Photonen innerhalb des Resonators, die das zu vermessende Fluidvolumen innerhalb der Fluidzelle durchdringen. Aufgrund der sich innerhalb des Resonators ausbildenden stehenden (optischen) Welle, kann innerhalb des Resonators eine sehr hohe Anregungsfeldstärke erzielt werden, wodurch eine optische Signalverstärkung und damit ein verbessertes SNR erreicht wird. Bei optimaler Ausgestaltung des Resonators kann eine Signalüberhöhung um etwa den Faktor 100 erzielbar sein und damit weit höher, als dies mit vorbekannten Multireflexionszellen möglich ist.

Die von der Erfindung angestrebte Trennung zwischen der Erzeugung des Anregungslichts in der separaten, außerhalb des Resonators angeordneten Lichtquelle, und der Erzeugung einer stehenden Welle aus Anregungslicht innerhalb des Resonators, eröffnet zudem die Möglichkeit, die Lichtquelle weitestgehend vor Temperaturschwankungen zu schützen. Gleichzeitig ermöglicht die erfindungsgemäße aktive Stabilisierung des Resonators (mithilfe des über den Aktuator verstellbaren Resonator-Spiegels / mithilfe der Rückkopplungsschleife), Temperaturschwankungen im Bereich des Resonators auszugleichen, wie sie beispielsweise beim Einbringen des Fluids in die Fluidzelle bzw. beim Durchfluss des Fluids durch die Fluidzelle oder durch sonstige externe Einflüsse entstehen können.

Anders als bei Multi-Reflexionszellen, bei denen die Vervielfältigung der optischen Weglänge nicht von der Wellenlänge abhängt, entsteht somit innerhalb des im erfindungsgemäßen Konzept eingesetzten optischen Resonators eine optische Resonanz, die äußerst empfindlich auf auch nur kleinste optische Weglängenunterschiede oder Variationen der Wellenlänge des Anregungslichts reagiert. Mit anderen Worten kommt es nur dann zu einer optischen Resonanz, wenn für die eingesetzte Anregungslichtwellenlänge die Abstände der beiden Resonator-Spiegel ein ganzzahliges Vielfaches dieser Wellenlänge bilden.

Das Messkonzept auf Basis eines Resonators und einer hiervon separat ausgestalteten Lichtquelle ist daher technisch anspruchsvoll (insbesondere in Bezug auf die Justage aller optischen Komponenten zueinander), hat aber insbesondere den Vorteil, dass ein Fokusbereich im Zentrum des Resonators, in welchem die höchste Anregungsfeldstärke entsteht und somit der Großteil der Raman-Streuung stattfindet, räumlich sehr klein ausfallen kann. Daher kann mit einer entsprechenden Sammel-Optik, die das in dem Fokusbereich erzeugte Sekundärlicht für den Detektor einsammelt, das Sekundärlicht effizient erfasst werden. Dies ist günstig, um auch sehr schwache Raman-Signale noch messen zu können.

Der erwähnte (wenigstens eine) Detektor kann z.B. auch ein dispersives optisches Element umfassen, um mehrere Sekundärlichtwellenlängen oder beispielsweise mehrere Fluoreszenzwellenlängen separat detektieren zu können. Ein solches Element spaltet das zu detektierende Sekundärlicht auf, sodass einzelne Wellenlängen, z.B. mittels einer Detektorzeile, sensorisch separat erfasst werden können.

Der Detektor kann insbesondere in Form eines Spektrometers ausgestaltet sein. Ferner kann der Detektor, beispielsweise mittels eines optischen Filters, so eingerichtet sein, dass er das Sekundärlicht selektiv gegenüber dem Anregungslicht detektieren kann. Somit kann die Messanordnung wenigstens ein Anregungslichtfilter umfassen, welches das Anregungslicht vom Detektor fernhält.

Die separate Ausgestaltung der Fluidzelle hat den Vorteil, dass die Resonator-Spiegel funktional und räumlich getrennt von der Fluidzelle angeordnet werden können. Mit anderen Worten können die Resonator-Spiegel jeweils beabstandet zu der Fluidzelle angeordnet sein. Beispielsweise kann das Anregungslicht von der Fluidzelle ausgehend eine jeweilige Strecke in Luft bis zum jeweiligen Resonator-Spiegel zurücklegen. Dies ermöglicht es auch, wenigstens einen der Resonator-Spiegel aktiv verstellen zu können.

Durch die separate Ausgestaltung der Fluidzelle kann also deren Einfluss (z.B. aufgrund einer thermischen Ausdehnung aufgrund einer sich ändernden Temperatur des Fluids) auf den Resonator minimiert werden. Ferner kann die Fluidzelle einfach ausgetauscht werden, etwa wenn sich Partikel in der Fluidzelle abgelagert haben. Zudem kann so ein Beschlagen der Spiegel des Resonators besser verhindert werden. Zum verbesserten Schutz der Spiegeloberflächen der Resonator-Spiegel vor Verunreinigungen, insbesondere in anspruchsvollen Messumgebungen, können diese während der Messung zusätzlich mit einem Schutzgasstrom überströmt werden.

Aufgrund dieser technischen Vorteile bietet sich die erfindungsgemäße Messvorrichtung insbesondere zur Vermessung von Gasen von sehr niedriger optischer Dichte an, und zwar insbesondere in industriellen Messumgebungen, in denen signifikante Temperaturschwankungen zu erwarten sind.

Um das Einkoppeln des von der Lichtquelle ausgesandten Anregungslichts in den optischen Resonator zu verbessern, kann die Messanordnung eine Einkoppeloptik (diese kann mehrere optische Elemente aufweisen, z.B. ein Linsensystem) umfassen. Bevorzugt kann diese Einkoppeloptik eine Einkoppellinse und/oder einen optischen Isolator (zur Vermeidung von Rückkopplung in die separate Laser-Kavität der Lichtquelle) und/oder einen Strahlaufweiter umfassen.

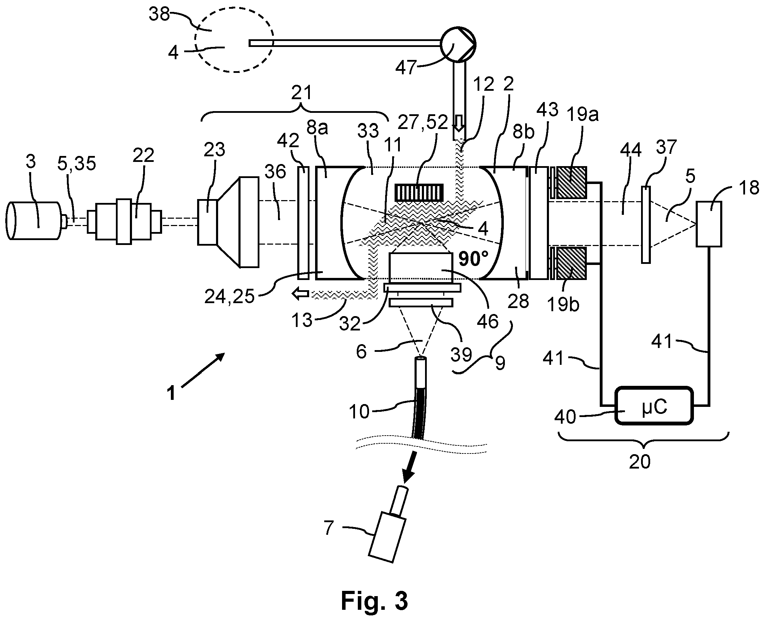

Es kann auch eine Fokussierlinse (dies kann insbesondere die zuvor beschriebene Einkoppellinse sein, welche insbesondere als Teil eines der beiden Resonator-Spiegel ausgestaltet sein kann) oder ein Fokussierspiegel vorgesehen sein, die/der das innerhalb des Resonators hin- und herlaufende Anregungslicht auf einen Fokusbereich innerhalb des Resonators (dieser Fokusbereich kann bevorzugt im Zentrum des Resonators angeordnet sein) fokussiert. Denn auf diese Weise kann die lokale Feldstärke innerhalb des Fokusbereichs weiter erhöht werden, um so in einem kleinen Messvolumen möglichst viel Raman-Signal bzw. Sekundärlicht zu erzeugen. Eine solche Fokussierung kann bevorzugt durch den jeweiligen Resonator-Spiegel selbst bewirkt sein, wenn dieser gekrümmt ausgestaltet wird. Ein Bündeln des Anregungslichts in einem Fokusbereich innerhalb des Resonatorraums bietet sich insbesondere an, wenn auch die Detektion des Sekundärlichts (genauer: eine dem Detektor zugeordnete Sammeloptik) auf den Fokusbereich ausgerichtet ist, beispielsweise in einer 90°-Messanordnung (vgl. Fig. 3). In einem solchen Fall überlappt somit das Volumen in welchem die Anregung stattfindet (Fokusbereich) mit dem (Mess-)Volumen, aus welchem das detektierte Sekundärlicht emittiert wird.

Mit anderen Worten kann der optische Resonator somit so ausgestaltet sein, dass er eine stehende Welle des Anregungslichts erzeugt. Dies kann so erfolgen, dass innerhalb der Fluidzelle wenigstens ein Maximum einer Anregungsfeldstärke des Anregungslichts entsteht. Insbesondere in einem solchen Fall ist es bevorzugt, wenn der wenigstens eine Detektor mittels einer Sammeloptik dazu eingerichtet ist, Sekundärlicht aus einem räumlichen Bereich dieses wenigstens einen Maximums der Anregungsfeldstärke zu detektieren. Hierbei können auch mehrere Sammeloptiken zum Einsatz kommen, die aus unterschiedlichen Richtungen Sekundärlicht aus dem Resonator, insbesondere aus dem besagten Bereich (dies kann insbesondere ein Fokusbereich sein, wie nachfolgend erläutert), einsammeln.

Alternativ zum Einsatz einer solchen Sammeloptik ist es aber auch möglich, einen freien Strahl von Sekundärlicht direkt mittels des Detektors zu erfassen.

Erfindungsgemäß kann die Aufgabe auch durch weitere vorteilhafte Ausführungen gelöst werden, die wir im Folgenden beschreiben:
So sieht eine praktische Implementierung der Erfindung vor, dass die Messanordnung einen Sensor zum Messen einer Intensität des Anregungslichts umfasst und dass ferner eine Rückkopplungsschleife eingerichtet ist, die auf Basis eines Sensorsignals des Sensors eine automatische Verstellung des Resonator-Spiegels durch Ansteuern des Aktuators bewirkt. Mit anderen Worten wird dann der Aktuator den jeweiligen Resonator-Spiegel auf Basis einer Überprüfung der optischen Resonanz verstellen, die anhand des sensorisch detektierten Anregungslichts von der Rückkopplungsschleife automatisch vorgenommen wird. Tritt beispielsweise eine thermische Ausdehnung der Fluidzelle und/oder der Resonator-Spiegel auf, die die effektive optische Pfadlänge zwischen den beiden Resonator-Spiegeln und damit die optische Interferenz des Anregungslichts innerhalb des Resonators verändert, so kann dies anhand des Messsignals des Sensors erfasst und durch die automatische Verstellung des Resonator-Spiegels (die durch die Rückkopplungsschleife bewirkt wird) kompensiert werden. Eine hierzu technisch äquivalente, wenn auch weniger bevorzugte, Ausgestaltung sieht vor, dass die Rückkopplungsschleife eine gemessene Intensität des Sekundärlichts (insbesondere anstelle der oder aber zusätzlich zu der Intensität des Anregungslichts) berücksichtigt, um die automatische Verstellung des Resonator-Spiegels zu bewirken.

Eine mit dem Aktuator bewirkbare Verstellung des Resonator-Spiegels kann dabei eine Verstellung entlang einer optischen z-Achse des Resonators und/oder eine Verkippung des Resonator-Spiegels umfassen. Zudem sind auch Ausgestaltungen möglich, bei denen beide Resonator-Spiegel aktiv mittels eines jeweiligen Aktuators durch die Rückkopplungsschleife verstellt werden.

Der Sensor kann insbesondere als optischer Leistungs- oder Intensitätsmesser, beispielsweise in Form einer Photodiode, ausgestaltet sein. Anhand des vom Sensor erzeugten Messsignals ist somit ein Rückschluss möglich auf eine Intensität einer stehenden Welle aus Anregungslicht, die im optischen Resonator erzeugt werden soll / erzeugt wird. Hierzu ist es aber erforderlich, das Anregungslicht zu messen, nachdem es in den Resonator eingekoppelt wurde. Denn je nach momentaner Stellung der beiden Resonator-Spiegel kann es innerhalb des Resonators zu einer mehr oder weniger guten Resonanzverstärkung des Anregungslichts aufgrund konstruktiver Interferenz kommen.

Mittels der Rückkopplungsschleife (feedback loop) und auf Basis einer von dem Sensor gemessenen Intensität kann der jeweilige Resonator-Spiegel somit aktiv während der Messung mit dem Aktuator verstellt werden, um die Resonanz innerhalb des optischen Resonators auch bei Temperaturschwankungen oder sonstigen Störungen aufrechtzuerhalten. Mit Hilfe der Rückkopplungsschleife kann somit eine optische Resonanzerhöhung des Anregungslichts innerhalb des Resonators (insbesondere gegen temperaturbedingte Schwankungen) stabilisiert werden. Die Rückkopplungsschleife kann insbesondere mittels Elektronik (diese kann z.B. einen Mikrocontroller umfassen) und geeigneter Signalübertragungsleitungen ausgestaltet sein.

Beispielsweise kann vorgesehen sein, dass mit Hilfe des wenigstens einen Aktuators eine Resonatorlänge des Resonators einstellbar ist. Darüber hinaus kann vorgesehen sein, dass mit Hilfe des wenigstens einen Aktuators eine korrekte Ausrichtung des verstellten Resonator-Spiegels zu einer gewünschten optischen Achse des Resonators einstellbar ist. Dies kann insbesondere bei Verwendung von gekrümmten Resonator-Spiegeln vorteilhaft sein, um das Anregungslicht auf einen gewünschten Fokusbereich innerhalb des Resonatorraums bündeln zu können.

Die Raman-Messanordnung kann auch eine Auskoppeloptik umfassen, die das Anregungslicht aus dem Resonator auskoppelt und zum Sensor leitet. Die Auskoppeloptik kann dabei auch so ausgestaltet sein, dass sie Sekundärlicht (zumindest Teile des Sekundärlichts) aus dem Resonator auskoppelt. Hierbei kann es vorteilhaft sein, wenn die Auskoppeloptik ein optisches Filter umfasst, welches das Sekundärlicht vom Sensor fernhält. In diesem Fall erfasst der Sensor somit das Anregungslicht selektiv. Alternativ oder ergänzend zur Verwendung eines solchen Filters kann die Auskoppeloptik auch einen Strahlteiler umfassen, welcher das aus dem Resonator ausgekoppelte Anregungs- und Sekundärlicht auf unterschiedliche optische Pfade verteilt. Und schließlich kann die Auskoppeloptik auch eine Sammellinse umfassen, die das ausgekoppelte Anregungslicht auf eine aktive Fläche des Sensors konzentriert.

Weiter kann die Raman-Messanordnung wenigstens eine Sammeloptik umfassen, die dazu eingerichtet ist, Sekundärlicht, welches innerhalb des Resonators (genauer: innerhalb der Fluidzelle und aufgrund der Wechselwirkung des Anregungslichts mit dem Fluid) erzeugt wird, einzusammeln und zu dem wenigstens einen Detektor weiterzuleiten. Eine solche Sammeloptik kann auch als Teil der zuvor erläuterten Auskoppeloptik ausgestaltet sein. Ferner ist es vorteilhaft, wenn die jeweilige Sammeloptik eine möglichst große numerische Apertur (NA) aufweist, damit möglichst viel Sekundärlicht eingesammelt wird. Die Weiterleitung bis zum Detektor kann dabei vermittelt durch weitere optische Elemente oder einen Lichtleiter / eine Faser-Optik erfolgen.

Um mehrere Raman-Wellenlängen sensorisch erfassen zu können, können auch mehrere solcher Sammeloptiken ausgestaltet sein, die dann jeweils eingesammeltes Sekundärlicht zu einem zugeordneten Detektor leiten. D.h. eine erfindungsgemäße Raman-Messanordnung kann insbesondere mehrere separat ausgestaltete Detektoren umfassen. Der jeweilige Detektor kann somit ein spezifisches, an Molekülen des Fluids Raman-gestreutes Sekundärlicht (eine bestimmte Raman-Wellenlänge) vermittelt über eine zugeordnete Sammel-Optik (und ggf. weitere optische Elemente und/oder einen Lichtleiter) empfangen. Um dabei spezifische Raman-Messwellenlängen erfassen zu können, kann die jeweilige Sammeloptik (insbesondere jeweils) ein (insbesondere jeweiliges) Anregungslichtfilter umfassen. Solche Filter, die auch unter dem Begriff "Raman-Filter" bekannt sind, blockieren das Anregungslicht und lassen gleichzeitig wenigstens eine interessierende Raman-Wellenlänge passieren. Ein solches Anregungslichtfilter kann insbesondere als Notch- oder Bandpass-Filter ausgestaltet sein; darüber hinaus sind auch Ausgestaltungen als Edge-Filter möglich. Wird beispielsweise eine Laserwellenlänge von 532 nm als Anregungslicht verwendet, kann ein Raman-Filter mit einem Hochpass oberhalb von 534 nm eingesetzt werden, um langwelligere Raman-Wellenlängen zu detektieren. Das Anregungslichtfilter kann aber auch so ausgestaltet sein, dass nur eine bestimmte Raman-Wellenlänge transmittiert wird (beispielsweise mittels eines spektral schmalen Bandpass-Filters), während andere Raman-Wellenlängen und das Anregungslicht blockiert werden. Auch so kann sichergestellt werden, dass eine gewünschte Raman-Wellenlänge bis zum (u.U. jeweiligen) Detektor gelangt und entsprechend ein Raman-Signal für diese Wellenlänge gemessen werden kann.

Wenn der Detektor als Spektrometer ausgestaltet ist, können hingegen auch mehrere Raman-Wellenlängen mit einer einzigen Sammeloptik zum Spektrometer geleitet werden, um dort vermessen zu werden.

Die jeweilige Sammeloptik kann insbesondere so ausgestaltet und ausgerichtet sein, dass sie das Sekundärlicht in einer Richtung quer zu (insbesondere in einem 90° Winkel = Detektion in 90° Geometrie) zu einer optischen Achse des Resonators oder aber in Richtung dieser Achse (= Detektion in Vorwärtsstreuung) einsammelt. Bei der ersten Variante wird somit der zugeordnete Detektor Sekundärlicht detektieren, welches quer zu einer Hauptausbreitungsrichtung des Anregungslichts innerhalb des Resonators (= optische Achse des Resonators) vom Fluid abgegeben/ausgestrahlt wird. Bei der zweiten Varianten wird die Sammeloptik hingegen Sekundärlicht einsammeln, welches in Richtung der optischen Achse des Resonators vom Fluid emittiert / gestreut wird.

Werden beispielsweise in einer 90° Geometrie zwei Detektionsarme mit jeweiliger Sammeloptik ausgestaltet oder ein solcher Detektionsarm zusammen mit einem zugeordneten Reflektor, der Sekundärlicht in den Detektionsarm zurückwirft, so lässt sich (in einer Ebene senkrecht zur Polarisationsrichtung des Anregungslichts) eine zusätzliche Erhöhung der Signalstärke um den Faktor 2 erzielen. In diesem Fall kann also in etwa doppelt so viel Raman-Signal wie bei Verwendung nur eines einzigen Detektionsarms optisch abgegriffen werden. Somit kann die Messanordnung wenigstens einen, insbesondere sphärischen, optischen Reflektor umfassen, welcher Sekundärlicht in Richtung auf den Detektor zurückwirft.

Werden mehrere Sammeloptiken zum Einsammeln von Sekundärlicht eingesetzt, kann das jeweilige Sekundärlicht auch beispielsweise über jeweilige Faser- oder sonstige Optiken bis zu einem gemeinsamen Detektor weitergeleitet werden. Hierbei können die jeweiligen Sammeloptiken beispielsweise auf ein gemeinsames Messvolumen innerhalb der Fluidzelle ausgerichtet sein (in welchem eine hohe Sekundäremission entsteht). Ferner ist es im Rahmen der Erfindung ebenso möglich, mittels mehrerer Sammeloptiken jeweilige, kleinere und räumlich voneinander getrennte Fluid-Messvolumina innerhalb der Fluidzelle optisch abzutasten, um jeweils Sekundärlicht einzusammeln und zu einem (u.U. gemeinsamen) Detektor leiten zu können.

Gemäß einer weiteren Ausgestaltung kann die (insbesondere jeweilige) Sammeloptik auf einen (insbesondere wie zuvor erläuterten) Fokusbereich (im welchem eine hohe Anregungslichtfeldstärke herrscht) innerhalb des Resonators ausgerichtet sein. In diesem Fall erfasst die Sammeloptik somit selektiv Sekundärlicht, welches im Fokusbereich entsteht, und leitet dieses zum zugeordneten Detektor weiter.

Die zuvor erwähnte Lichtquelle kann insbesondere eine Laserlichtquelle sein, die über einen eigenen, separaten, optischen Laser-Resonator (also eine eigene Laser-Kavität) verfügt.

Um eine hohe Funktionalität der Messanordnung über längere Benutzungszeiträume aufrecht erhalten zu können, ist es von großem Vorteil, wenn die Fluidzelle so innerhalb des Resonators angeordnet ist, dass die Fluidzelle aus dem Resonator entnehmbar und damit austauschbar ist. Hierbei kann auch (wenigstens) ein Justage-Mittel vorgesehen sein, das nach Austausch oder Wiedereinbau der Fluidzelle (z.B. nach erfolgter Reinigung) eine initiale Justage der Fluidzelle innerhalb des optischen Resonators ermöglicht. Denn in der Regel können mit dem verstellbaren Resonator-Spiegel nur kleinste optische Abweichungen abgefangen werden.

Gemäß einer Ausgestaltung weist die Fluidzelle ein optisches Eintrittsfenster und ein optisches Austrittsfenster auf, wobei vorzugsweise beide dieser Fenster jeweils beabstandet von den Resonator-Spiegeln angeordnet sind (sobald die Fluidzelle innerhalb des Resonators in ihrer finalen Montageposition montiert ist). Hierbei ist es besonders bevorzugt, wenn die beiden Fenster der Fluidzelle, so ausgestaltet sind, dass eine Reflexion von zumindest einer Polarisationsrichtung des Anregungslichts am jeweiligen Fenster vermindert ist. Aufgrund dieser Ausgestaltung stört die Fluidzelle die Ausbildung der stehenden Welle (zumindest für eine Polarisationsrichtung) innerhalb des Resonators somit nicht. Eine solche Reflexionsminderung kann beispielsweise durch geometrische Ausgestaltung des Fensters (insbesondere als Brewster-Fenster) oder mittels einer Antireflexionsschicht erzielt werden.

Eine bevorzugte Ausgestaltung schlägt vor, dass das Eintrittsfenster und das Austrittsfenster der Fluidzelle jeweils als Brewster-Fenster ausgestaltet sind (sodass also Fensterflächen der Fenster im Brewster-Winkel zu einer optischen Achse des Resonators stehen). Bei einer solchen Ausgestaltung wird das zur Einfallsebene parallel polarisierte Anregungslicht nicht durch Reflexion geschwächt, während der senkrecht polarisierte Anteil des Anregungslichts zu einem Teil reflektiert wird. Hierdurch sinkt die Güte des Resonators für diese senkrechte Polarisationsrichtung, während die andere bevorzugt wird. Im Ergebnis wird sich so eine stehende Welle aus parallel polarisiertem Anregungslicht innerhalb des Resonators ausbilden, d.h. nur diese Polarisationsrichtung wird innerhalb des Resonators verstärkt.

Es kann somit optional vorgesehen sein, dass das Eintrittsfenster im Brewster-Winkel zu einem von der Lichtquelle ausgesandten und in den optischen Resonator einfallenden Lichtstrahl ausgerichtet ist. Ferner kann vorgesehen sein, dass das Austrittsfenster im Brewster-Winkel zu einem im optischen Resonator reflektierten Lichtstrahl ausgerichtet ist. Die Verwendung von Brewster-Fenstern hat den Vorteil, dass dann auf den Einsatz von Antireflexionsschichten auf den beiden Fenstern der Fluidzelle (als technischer Alternative) verzichtet werden kann. Denn solche Antireflexionsschichten können störende Raman-Signale erzeugen, weil es in den Schichten zu einer (unerwünschten) parasitären Raman-Streuung kommen kann.

Soll beispielsweise ein kontinuierliches Fluid-/Gasfluss, insbesondere in Form eines Bypassstroms mit der Raman-Messanordnung vermessen werden, so kann vorgesehen sein, dass die Fluidzelle einen Einlass und einen mit dem Einlass kommunizierenden Auslass aufweist, sodass ein Strom des Fluids die Fluidzelle kontinuierlich durchströmen kann (dynamische Messung). In diesem Fall kann der Fluidfluss somit durch die Fluidzelle hindurch geleitet und dabei kontinuierlich mit der Messanordnung optisch vermessen werden.

Der Aktuator, der den Resonator-Spiegel verstellt, kann insbesondere als ein Piezo-Aktuator oder als ein thermo-mechanischer Aktuator ausgestaltet sein. Bei ersterem beruht die Aktuierung auf einer durch Anlegen einer elektrischen Spannung verursachten Ausdehnung; bei letzterem hingegen auf einer thermischen Ausdehnung, die z.B. durch elektrisches Beheizen erzeugt werden kann.

Zur Lösung der Aufgabe schlägt die Erfindung auch spezifische Verwendungen von erfindungsgemäß ausgestalteten Raman-Messanordnungen vor: Einmal, um zeitlich kontinuierlich einen Fluidstrom zu vermessen, der durch die Fluidzelle geleitet wird, wobei dieser Fluidstrom insbesondere ein Bypassstrom (z.B. abgezweigt aus einer Prozessgasleitung) sein kann.

Und zum anderen kann eine erfindungsgemäße Raman-Messanordnung auch für einen zeitlich diskontinuierlichen Messbetrieb eingesetzt werden, etwa zum Vermessen von (insbesondere statischen) Fluidproben, die (zum Beispiel mittels einer Förderpumpe) zeitweise in die Fluidzelle eingebracht werden.

Grundsätzlich können mit einer erfindungsgemäßen Raman-Messanordnung sowohl statische/ruhende Fluid-Proben vermessen werden als auch dynamische Fluide, die gerade in Bewegung sind. Beispielsweise kann eine erfindungsgemäße Raman-Messanordnung Teil einer Messzelle sein, die in einen Bypass eingesetzt wird, in welchem Bypass ein aus einem Prozessfluidstrom (dies kann insbesondere ein Strom eines Prozessgases oder einer Prozessflüssigkeit sein) abgezweigter Teilfluidstrom optisch mit der Messanordnung vermessen wird. In einem solchen Szenario (also insbesondere dann, wenn das zu vermessende Fluid kontinuierlich durch die Fluidzelle fließt), kann die optische Messanordnung ein kontinuierliches Messsignal liefern basierend auf einer fortlaufenden optischen Vermessung des in der Fluidzelle momentan befindlichen Fluids; oder aber der Fluidstrom wird zeitlich diskontinuierlich, z.B. in festen Messintervallen / nur zu festgelegten Zeitpunkten vermessen. Dies ist insbesondere für Anwendungen der Qualitäts- und Prozesskontrolle von hohem Interesse.

Bei anderen Anwendungen, beispielsweise dann, wenn Abgase in einem Industrie-Schornstein optisch untersucht werden sollen, können Fluidproben (also insbesondere Gasproben) mittels der erwähnten Förderpumpe aktiv aus einem Fluid-/Gasstrom (dies kann z.B. ein Abgasstrom sein) entnommen und der Fluidzelle innerhalb des optischen Resonators der erfindungsgemäßen Messanordnung zugeführt werden, um so die entnommene Fluidprobe (und damit das erwähnte Abgas) optisch vermessen zu können. Auch hierbei kann die Fluidprobe entweder statisch in der Fluidzelle während der Messung ruhen, oder aber während der Messung durch die Fluidzelle hindurchbewegt werden.

Zur Lösung der Aufgabe wird schließlich auch das Messverfahren gemäß Anspruch 15 vorgeschlagen, welches zur Messung von Raman-Wellenlängen und/oder von Fluoreszenzwellenlängen eingesetzt werden kann. Dieses Verfahren sieht vor, dass mit Hilfe einer optischen Messanordnung (die vorzugsweise wie zuvor beschrieben oder nach einem der auf diese Messanordnung gerichteten Ansprüche ausgestaltet sein kann), die einen optischen Resonator mit zwei Resonator-Spiegeln sowie eine Lichtquelle umfasst, ein Fluid (welches Anregungslicht mittels Raman-Streuung und/oder auf Basis von Fluoreszenz in Sekundärlicht umwandelt) optisch vermessen wird. Die eigentliche optische Vermessung kann dabei mit Hilfe eines Detektors erfolgen, der das erzeugte Sekundärlicht detektiert, wie zuvor bereits im Detail beschrieben.

Hierbei kann das zu vermessende Fluid erfindungsgemäß in einer als separates Bauteil ausgestalteten Fluidzelle vorgehalten werden, wie zuvor bereits im Detail beschrieben wurde. Die Fluidzelle kann dabei (vorzugsweise austauschbar wie zuvor im Detail beschrieben) innerhalb eines Resonatorraums des optischen Resonators der Messanordnung angeordnet sein, wobei der Resonatorraum durch die beiden Resonator-Spiegel begrenzt ist.

Das Verfahren sieht nun vor, dass das Fluid mittels Anregungslicht optisch angeregt wird, welches von der Lichtquelle (die außerhalb des Resonators angeordnet und separat von diesem ausgestaltet ist) bereitgestellt wird. Dieses (externe - in Bezug auf den Resonator) Anregungslicht wird bei diesem Konzept innerhalb des optischen Resonators in Resonanz gebracht (durch entsprechende Justage der beiden Resonator-Spiegel), sodass sich eine stehende optische Welle aus Anregungslicht innerhalb des Resonators ausbildet. Je nach Ausgestaltung kann sich dabei die Lichtquelle sogar innerhalb des Fluids befinden, welches vermessen wird, etwa wenn die gesamte Messanordnung in einem Gasstrom angeordnet wird oder wenn sich die Lichtquelle innerhalb der erwähnten Fluidzelle befindet, welche das zu vermessende Fluid vorhält.

Ferner ist bei diesem Messkonzept vorgesehen, dass durch Verstellen von wenigstens einem der beiden Resonator-Spiegel des Resonators mit Hilfe eines (mit einem Ansteuersignal ansteuerbaren) Aktuators die optische Resonanz während der Messung aktiv stabilisiert wird. Hierzu kann eine Rücckopplungsschleife wie zuvor beschrieben eingesetzt werden. D.h. die Verstellung des Resonator-Spiegels kann auf Basis einer (gemessenen) Intensität des Anregungslichts erfolgen (wobei sich diese erst nach Wechselwirkung des Resonators mit dem optischen Resonator ergibt), welche Intensität mit Hilfe eines Sensors gemessen wird. Je nach Stellung der beiden Resonator-Spiegel kann diese Wechselwirkung das Anregungslicht abschwächen (destruktive Interferenz) oder verstärken (konstruktive Interferenz). Die Messung kann dabei erfolgen, nachdem das Anregungslicht aus dem Resonator ausgekoppelt wurde. Technisch gleichwertig hierzu kann aber auch ein Teil des Anregungslichts aus dem Resonanzpfad innerhalb des Resonators abgezweigt und (insbesondere noch innerhalb des Resonatorraums) von einem Sensor vermessen werden. Und ferner ist es technisch auch in äquivalenter Weise möglich (wie zuvor beschrieben) in der Rückkopplungsschleife alternativ oder ergänzend eine gemessene Intensität des Sekundärlichts zu berücksichtigen und auf dieser Basis die Verstellung des Resonator-Spiegels zu bewirken.

Die Erfindung wird nun anhand von Ausführungsbeispielen näher beschrieben, ist aber nicht auf diese Ausführungsbeispiele beschränkt: Weitere Ausbildungen der Erfindung können beispielsweise aus der nachfolgenden Beschreibung eines bevorzugten Ausführungsbeispiels in Verbindung mit der allgemeinen Beschreibung, den Ansprüchen sowie den Zeichnungen gewonnen werden.

Bei der folgenden Beschreibung verschiedener bevorzugter Ausführungsformen der Erfindung erhalten in ihrer Funktion übereinstimmende Elemente auch bei abweichender Gestaltung oder Formgebung übereinstimmende Bezugszahlen.

Es zeigt:
- Fig. 1: eine schematische, stark vereinfachte und nicht maßstabsgetreue Ansicht einer ersten erfindungsgemäßen Messanordnung,
- Fig. 2: ein zweites Ausgestaltungsbeispiel einer erfindungsgemäßen Messanordnung und,
- Fig. 3: ein drittes Ausgestaltungsbeispiel einer erfindungsgemäßen Messanordnung,
- Fig. 4: ein viertes Ausgestaltungsbeispiel einer erfindungsgemäßen Messanordnung und
- Fig. 5: ein fünftes Ausgestaltungsbeispiel einer erfindungsgemäßen Messanordnung.

Die Figur 1 zeigt eine im Ganzen mit 1 bezeichnete optische Raman-Messanordnung, die dazu vorgesehen und ausgebildet ist, ein Sekundärlicht 6, insbesondere eine bestimmte Raman-Wellenlänge λ_{Ri}, die von einem optisch angeregten Fluid 4 Raman-gestreut wird, zu detektieren. Um das Fluid 4 optisch zu einer Raman-Streuung anzuregen, weist die Messanordnung 1 zunächst eine externe Lichtquelle 3 in Form einer Laserlichtquelle auf, die außerhalb eines optischen Resonators 2 angeordnet ist, der durch zwei zueinander ausgerichtete Resonator-Spiegel 8a und 8b gebildet ist. Wie eingangs erwähnt kann mit der gezeigten Messanordnung 1 grundsätzlich auch eine Emission von Fluoreszenzwellenlängen optisch angeregt werden. Während beim Raman-Effekt das anregende Photon am jeweiligen Molekül des Fluids 4 unelastisch gestreut wird, werden die Moleküle bei einer Fluoreszenz in einen angeregten Zustand versetzt, sodass es erst nach einer zeitlichen Verzögerung zur Emission einer Fluoreszenzwellenlänge als Sekundärlicht 6 kommt. Mit der Messanordnung 1 lassen sich also grundsätzlich sowohl Raman gestreutes Sekundärlicht 6 als auch auf einer Fluoreszenz beruhendes Sekundärlicht 6 detektieren.

Wie die Figur 1 zeigt, begrenzen die beiden Spiegel 8a, 8b einen Resonatorraum 33, in welchem (herausnehmbar und in der genauen Einbauposition mittels des illustrierten Justagemittels 27 feinpositionierbar) eine Fluidzelle 11 angeordnet ist. Die Lichtquelle 3 sendet ein kohärentes und monochromatisches Anregungslicht 5 der Wellenlänge λ_{A} aus, welches mittels der gezeigten Einkoppeloptik 21 (die einen Strahlaufweiter 23, einen Laserfilter 42 sowie eine Einkoppellinse 24 umfasst) in den Resonatorraum 33 eingekoppelt wird.

Die beiden Resonator-Spiegel 8a und 8b sind jeweils durch Aufbringen einer hochgradig reflektierenden Beschichtung auf die illustrierten Spiegeloberflächen 34 ausgestaltet. Diese Spiegeloberflächen werden dabei durch gekrümmte Flächen von zwei plan-konkaven Linsen 24 und 29 gebildet, die jeweils als Einkoppellinse 24 bzw. als Auskoppellinse 29 dienen, um so das von der Lichtquelle 3 ausgesandte Laserlicht 5 in den optischen Resonatorraum 33 ein- bzw. aus diesem auszukoppeln.

Wie die Figur 1 zeigt, durchläuft bei diesem Ausgestaltungsbeispiel der von der Lichtquelle 3 ausgesandte monochromatische Lichtstrahl 35 zunächst einen optischen Isolator 22 (welcher verhindert, dass Licht aus der Messanordnung 1 zurück zur Lichtquelle 3 gelangt) und wird dann mittels eines Strahlaufweiters 23 aufgeweitet. In anderen Ausgestaltungen könnte aber beispielsweise auf eine solche Aufweitung verzichtet werden. Der so aufgeweitete Strahl 36 wird an der gekrümmten Fläche der Einkoppellinse 24 gebrochen und so auf einen Fokusbereich 26 im Zentrum des Resonatorraums 33 konzentriert, wobei dieser Fokusbereich 26 auch im Zentrum der Fluidzelle 11 angeordnet ist. Die Einkoppelllinse 24 fungiert hier somit auch als Fokussierlinse 25, die das Anregungslicht 5 auf den Fokusbereich 26 fokussiert. In dem Fokusbereich 26 entsteht daher eine hohe Anregungsfeldstärke des Anregungslichts 5, welches den eingesetzten Laserfilter 42 nahezu ungehindert passieren kann. Nachdem der von der Einkoppellinse 24 erzeugte Lichtstrahl 16 die Fluidzelle 11 vollständig durchlaufen hat, trifft er auf die gegenüberliegende Spiegeloberfläche 34b und wird dort in sich zurück reflektiert, sodass ein reflektierter Lichtstrahl 17 von Anregungslicht 5 erneut die Fluidzelle 11 durchläuft.

Der Abstand der beiden Spiegel 8a und 8b ist nun gerade so gewählt, dass sich innerhalb des Resonatorraums 33 aufgrund konstruktiver Interferenz eine stehende Welle aus Anregungslicht 5 ausbildet. Dadurch kann die Anregungsfeldstärke in dem Fokusbereich 26 weiter erhöht werden.

Das auf diese Weise optisch angeregte Fluid 4 innerhalb der Fluidzelle 11 sendet Raman-gestreutes Sekundärlicht 6 in unterschiedliche Raumrichtungen aus, auch in Richtung der optischen z-Achse 28 des optischen Resonators 2, die in Figur 1 illustriert ist. Da zumindest der zweite Spiegel 8b für das Sekundärlicht 6 durchlässig ist und zudem beide Spiegel 8a und 8b zumindest teilweise für das Anregungslicht 5 durchlässig sind, enthält der aus dem optischen Resonator 2 mithilfe der Auskoppeloptik 29 ausgekoppelte Strahlengang 44 sowohl Anregungslicht 5 als auch Sekundärlicht 6.

Dieser Strahlengang 44 trifft auf einen wellenlängenselektiven Strahlteiler 31, der das Anregungslicht 5 und das Sekundärlicht 6 auf die beiden unterschiedlichen optischen Pfade 45a und 45b aufteilt. Mit anderen Worten realisiert dieser Strahlteiler 31 somit ein Anregungslichtfilter 32, welches das Sekundärlicht 6 ungehindert in Richtung auf die illustrierte Sammeloptik 9 passieren lässt, während das Anregungslicht 5 in den Teilstrahlengang 45b reflektiert wird und somit vom Detektor 7 ferngehalten wird. Selbstverständlich sind aber auch mannigfaltige abweichende Ausgestaltungen eines solchen Anregungslichtfilters 32 denkbar.

Das Sekundärlicht 6, welches den Strahlteiler 31 in Figur 1 passiert, gelangt als Teilstrahlengang 45a auf die gezeigte Einkoppeloptik 39 und wird durch diese in den gezeigten Lichtleiter 10 eingekoppelt, welcher das Sekundärlicht 6 bis zu einem angeschlossenen Detektor 7 weiterleitet. Wird dieser Detektor 7 beispielsweise als Spektrometer ausgestaltet, so können unterschiedliche Raman-Wellenlängen λ_{Ri} vermessen werden. Dies erlaubt dann eine qualitative wie quantitative Analyse der Zusammensetzung des Fluids 4.

Nach Reflexion an dem Strahlteiler 31 wird hingegen das aus dem Resonator 2 ausgekoppelte Anregungslicht 5 mithilfe einer optischen Linse 37 auf einen Sensor 18 geleitet, der als Leistungsmesser ausgestaltet ist und somit einen Rückschluss auf die Intensität des Anregungslichts 5 innerhalb des Resonators 2 erlaubt. Die von dem Sensor 18 gelieferten Sensorsignale werden mittels einer Signalleitung 41 zu einem Mikrocontroller 40 übertragen. Der Mikrocontroller 40 wertet die vom Sensor 18 erzeugten Signale aus und erzeugt daraus Ansteuersignale, die über die weitere Signalleitung 41 zwei Aktuatoren 19a und 19b zugeführt werden. Diese Aktuatoren greifen an einer Spiegelhalterung 43 an, die den rechten Resonator-Spiegel 8b hält. Somit kann der rechte Resonator-Spiegel 8b mithilfe dieser beiden ansteuerbaren Aktuatoren 19a und 19b aktiv verstellt werden, um auf diese Weise die optische Resonanz, die sich innerhalb des Resonatorraums 33 ausbildet (und sehr empfindlich auf Temperaturschwankungen reagiert), zu stabilisieren.

In allen drei Ausgestaltungsbeispielen der Figuren 1, 2 und 3 dient der jeweilige Sensor 18 somit dem Messen einer Intensität des Anregungslichts 5, welches innerhalb des Resonators 2 zwischen den beiden Resonator-Spiegeln 8a und 8b hin- und herläuft und so eine stehende optische Welle ausbildet. Mithilfe des Mikrokontrollers 40 ist dabei jeweils eine Rückkopplungsschleife 20 ausgestaltet, die auf Basis des von dem Sensor 18 gelieferten Sensorsignals eine automatische Verstellung des Resonator-Spiegels 8b durch entsprechendes Ansteuern des Aktuators 19 bewirkt.

Vorteilhaft an dieser erfindungsgemäßen Ausgestaltung der Messanordnung 1 ist vor allem, dass mithilfe des optischen Resonators 2 eine optische Signalverstärkung erzielt werden kann, sodass eine ausreichende Menge an Sekundärlicht 6 erzeugt werden kann. Und zudem kann die optische Resonanz innerhalb des Resonators 2 unabhängig von einer Resonanz innerhalb der Laserlichtquelle 2 mit Hilfe des Aktuators 19 stabilisiert werden, ohne dass dies die Anregungswellenlänge λ_{A} beeinflusst.

Da die Fluidzelle 11 als separates Bauteil ausgestaltet ist, kann diese einfach ausgetauscht oder für eine Reinigung ausgebaut werden und anschließend mit Hilfe des Justagemittels 27 wieder hochgenau innerhalb des Resonatorraums 33 ausgerichtet werden. Zudem ist es auf diese Weise möglich, eine Referenz-Fluidzelle (diese kann mit einem Referenz-Fluid mit genau bekannten Eigenschaften befüllt sein) anstelle der heraus genommenen Fluidzelle 11 temporär innerhalb des Resonatorraums 33 anzuordnen, um mit der Referenz-Fluidzelle eine Referenzmessung durchzuführen. Auf diese Weise ist eine einfache Referenzierung als auch eine Überprüfung der Messanordnung 1 mit Hilfe einer Testmessung unter Verwendung der Referenz-Fluidzelle möglich.

Wie in der Figur 1 schematisch angedeutet, kann ein Eintrittsfenster 14 und ein Austrittsfenster 15 der Fluidzelle 11 jeweils im Brewsterwinkel zur optischen Achse 28 des Resonators 2 ausgerichtet sein, wodurch dann nur eine Polarisationsrichtung des Anregungslichts 5 bevorzugt verstärkt wird.

Man erkennt auch in Figur 1, dass der Spiegelhalter 43 so ausgestaltet ist, dass der ausgekoppelte Strahlengang 44 den Spiegelhalter 43 ungehindert passieren kann, sodass vorwärts gestreutes Sekundärlicht 6 in gezeigten 0°-Detektionsrichtung von der zugeordneten Sammeloptik 9 eingesammelt werden kann.

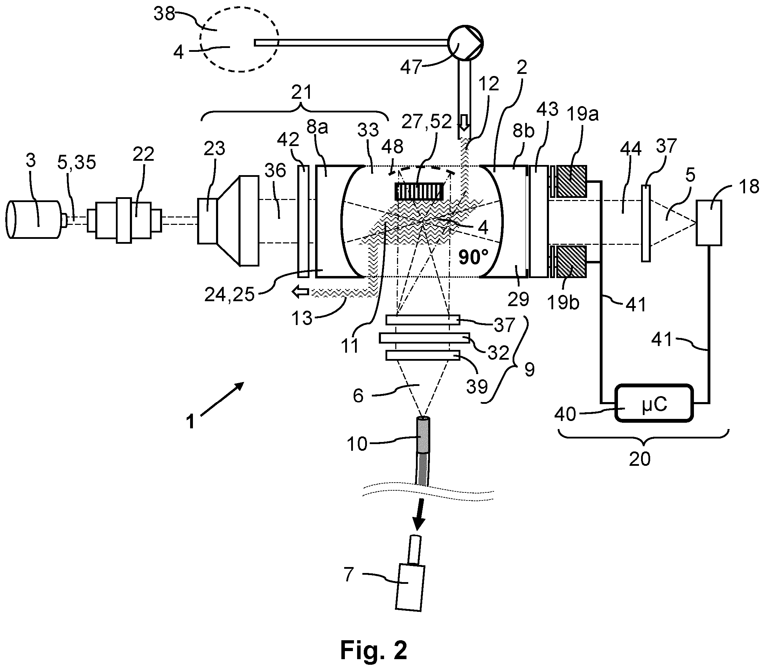

Bei dem zweiten Ausgestaltungsbeispiel gemäß Figur 2 ist hingegen ein Detektionsarm ausgestaltet, dessen Sammeloptik 9 Sekundärlicht 6 aus dem Fokusbereich 26 im Zentrum des Resonatorraums 33 einsammelt, welches im 90° Winkel zur optischen Achse 28 des Resonators 2 von dem Fluid 4 in der Fluidzelle 11 Raman-gestreut wird. Das vom Fluid 4 ausgesandte Raman-gestreute Sekundärlicht 6 passiert hier (wie bereits im Beispiel der Figur 1) eine Wandung der Fluidzelle 11, bevor es von der Sammeloptik 9 eingesammelt wird.

Im Beispiel der Figur 2 wird das Anregungslicht 5 mithilfe der Auskoppeloptik 29 weiterhin in den ausgekoppelten Strahlengang 44 überführt und dann mithilfe der optischen Linse 37 auf den Sensor 18 fokussiert. Hierbei kann auch optional, wie in Figur 1 illustriert, ein optisches Filter 30 eingesetzt werden, welches das Sekundärlicht 6 vom Sensor 18 fernhält, aber das Anregungslicht 5 passieren lässt.

Wie in Figur 2 mittels der dortigen Strichpunkt-Linien angedeutet, kann die Messanordnung 1 auch wenigstens einen Reflektor 48 umfassen, der Sekundärlicht 6, welches von dem Fluid 4 in der Fluidzelle 11 ausgesandt wird, in Richtung auf den Detektor 7 bzw. die zugeordnete Sammeloptik 9 zurückwirft, um so noch mehr Sekundärlicht 6 einsammeln zu können.

Auch im weiteren Ausgestaltungsbeispiel der Figur 3 ist ein Detektionsarm in einer 90°-Geometrie ausgestaltet, wobei die dortige Sammeloptik 9 neben der gezeigten Einkoppeloptik 39 (die das Sekundärlicht 6 in den Lichtleiter 10 einkoppelt) auch eine optische Linse mit einer hohen numerischen Apertur von NA größer 0,2 umfasst. Diese Linse 46 weist eine kurze Brennweite auf und ist dadurch jedoch in der Lage, eine große Menge an Sekundärlicht 6 einzusammeln, was günstig ist, um die Sensitivität der Messanordnung 1 zu steigern. Durch den Vergleich der Figuren 2 und 3 erkennt man dabei, dass im Beispiel der Figur 3 die dortige Sammeloptik 9, genauer die besagte Linse 46, zumindest teilweise innerhalb des Resonatorraums 33 (gekennzeichnet durch die gepunkteten Linien) angeordnet ist.

Bei beiden Beispielen der Figuren 2 und 3 ist eine Förderpumpe 47 vorgesehen, mit der Proben des Fluids 4 aus dem illustrierten Probenentnahmeraum 38 entnommen und über die Zuleitung 12 bis in die Fluidzelle 11 gepumpt werden können, damit die Probe dort optisch vermessen werden kann.

In allen drei Ausgestaltungsbeispielen der Figuren 1-3 sammelt die jeweilige Sammeloptik 9 somit Sekundärlicht 6 ein, welches in dem Fokusbereich 26 durch Raman-Streuung von dem Fluid 4 erzeugt wird. Das in den Figuren 2 und 3 gezeigte Anregungslichtfilter 32 im Detektionsarm wirkt dabei ähnlich wie der Strahlteiler 31 im Beispiel der Figur 1: Dieses Filter 32 hält das Anregungslicht 5 vom Detektor 7 fern, lässt jedoch das Sekundärlicht 6 ungehindert passieren.

Anhand der Figur 2 kann man sich gut vorstellen, dass mithilfe der gezeigten Förderpumpe ein diskontinuierlicher Messbetrieb möglich ist, bei dem Fluidproben vermessen werden, sobald diese von der Förderpumpe 47 in die Fluidzelle 11 gepumpt worden sind. Im Beispiel der Figur 1 oder der Figur 2 wäre hingegen auch ein kontinuierliches optisches Vermessen eines Fluidstroms möglich, der dann kontinuierlich durch die Fluidzelle 11 durch den Einlass 12 hindurchgeleitet wird.

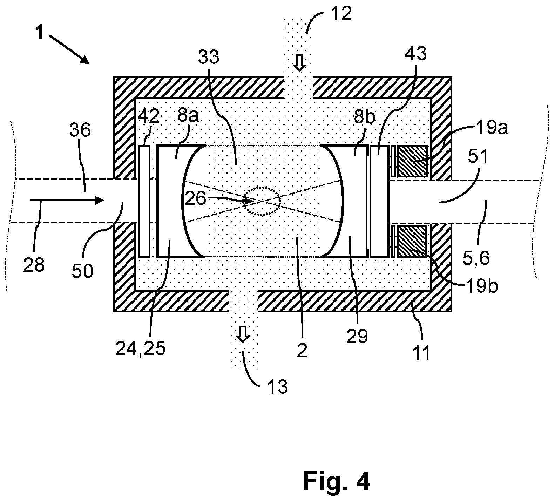

Die Figuren 4 und 5 zeigen zwei weitere mögliche Ausgestaltungen von erfindungsgemäßen Messanordnungen 1, wobei dort jeweils die Lichtquelle 3 und der notwendige Detektor 7, die in der Figur nicht gezeigt sind, beispielsweise wie in den vorherigen Beispielen der Figuren 1-3 ausgestaltet sein können: In Figur 4 sind der optische Resonator 2 und die beiden Aktuatoren 19a, 19b dabei innerhalb der dortigen Fluidzelle 11 angeordnet. Die Fluidzelle 11 weist dabei ein Eintrittsfenster 50 auf, durch welches das Anregungslicht 5 in die Fluidzelle 5 eintreten kann, sowie ein Austrittsfenster 51, durch welches mindestens das Sekundärlicht 6 austreten kann. Je nach Ausgestaltung könnte aber selbst die Lichtquelle 3 und/oder der Detektor 7 ebenfalls innerhalb der Fluidzelle 11 angeordnet sein. Im Beispiel der Figur 5 wurde auf eine Fluidzelle 11 verzichtet und die gesamte Messanordnung 1 ist in einem Gasstrom 49 platziert, sodass dort das zu vermessende Gas/Fluid 4 kontinuierlich durch den Resonatorraum 33 strömt.

Zusammenfassend wird eine optische Messanordnung 1 vorgeschlagen, die eine hochsensitive Raman-Messung eines Fluids 4 erlaubt, welches vorzugsweise in einer Fluidzelle 11 innerhalb der Messanordnung 1 vorgehalten wird. Die Fluidzelle 11 kann dabei innerhalb eines optischen Resonators 2 herausnehmbar angeordnet sein und ist somit separat von Resonator-Spiegeln 8a, 8b des Resonators 2 ausgestaltet. Eine separate Lichtquelle 3 stellt hierbei Anregungslicht 5 bereit, um eine optische Resonanzerhöhung innerhalb des Resonators 2 und so eine hohe Intensität an Raman-gestreutem Sekundärlicht 6 und damit ein hohes Raman-Signal zu erzeugen. Mithilfe eines Aktuators 19 wird dabei die Resonanzerhöhung aktiv stabilisiert (Vgl. Fig. 1).

### Bezugszeichenliste

- 1: optische Messanordnung
- 2: optischer Resonator
- 3: Lichtquelle (insbesondere in Form einer Laser-Lichtquelle)
- 4: Fluid (z.B. Gas oder Flüssigkeit)
- 5: Anregungslicht
- 6: Sekundärlicht (erzeugt durch den Raman-Effekt, bzw. durch die Wechselwirkung zwischen 5 und 4)
- 7: Detektor (zur Detektion von 6)
- 8: Resonator-Spiegel (von 2; zur Reflexion von 5 innerhalb von 2)
- 9: Sammeloptik (zum Einsammeln von 6)
- 10: Lichtleiter (insbesondere in Form einer Lichtfaser zum Weiterleiten von 6 an 7)
- 11: Fluidzelle (zum Aufnehmen von 4)
- 12: Einlass (zum Einleiten von 4 in 11)
- 13: Auslass (zum Ausleiten von 4 aus 11)
- 14: Eintrittsfenster (von 11; lässt 5 in 11 eintreten)
- 15: Austrittsfenster (von 11; lässt 5 aus 11 austreten)
- 16: Lichtstrahl (ausgesandt von 3, fällt in 2 und 11 ein)
- 17: Lichtstrahl (reflektiert innerhalb von 2, z.B. von 8b)
- 18: Sensor (zum Messen einer Intensität von 5 innerhalb von 2)
- 19: Aktuator (zum Verstellen von 8)
- 20: Rückkopplungsschleife (erfasst Signal von 18 und wandelt dieses in ein Ansteuersignal für 19 um)
- 21: Einkoppeloptik (zum Einkoppeln von 5 in 2)
- 22: optischer Isolator (verhindert Zurücksprechen von 5 in 3)
- 23: Strahlaufweiter (zum Aufweiten eines von 3 ausgesandten Lichtstrahls)
- 24: Einkoppellinse (zum Einkoppeln von 5 in 2)
- 25: Fokussierlinse (zum Fokussieren von 5 auf 26)
- 26: Fokusbereich (innerhalb von 2)
- 27: Justagemittel (zur Feinpositionierung von 11 innerhalb von 2, z.B. nach Austausch oder Wiedereinbau von 11 in 2)
- 28: optische (z-)Achse (von 2)
- 29: Auskoppeloptik / Auskoppellinse (zum Auskoppeln von 5 aus 2)
- 30: optisches Filter (lässt 5 passieren, blockiert/reflektiert 6) - optional
- 31: wellenlängenselektiver Strahlteiler (zum Aufteilen von 5 und 2 in unterschiedliche optische Pfade)
- 32: Anregungslichtfilter (lässt 6 passieren, blockiert/reflektiert 5; kann insbesondere als ein Raman-Filter ausgestaltet sein)
- 33: Resonatorraum (von 2; begrenzt durch 8)
- 34: Spiegeloberfläche
- 35: ausgesandter Strahl (emittiert von 3)
- 36: aufgeweiteter Strahl (basiert auf 35, aufgeweitet durch 23)
- 37: optische Linse (zum Fokussieren von 5 auf 18)
- 38: Probenentnahmeraum
- 39: Einkoppeloptik (zum Einkoppeln von 6 in 10)
- 40: Mikrokontroller
- 41: Signalleitungen (um Ableiten eines Messsignals von 18 / zum Ansteuern von 19)
- 42: Laserfilter (transmittiert 5, blockt 6)
- 43: Spiegelhalter (zum Halten von 8)
- 44: ausgekoppelter Strahlengang (umfasst 5 und 6)
- 45: Teilstrahlengang (erzeugt durch 31)
- 46: optische Linse mit NA > 0,2
- 47: Förderpumpe
- 48: Reflektor
- 49: Gasstrom
- 50: Eintrittsfenster
- 51: Austrittsfenster
- 52: Montagemittel

## Patentansprüche

1. **Optische Raman-Messanordnung (1)** zur Detektion von Sekundärlicht (6), welches an einem Fluid (4) Raman-gestreut wird, umfassend:
- einen optischen Resonator (2), der zwei Resonator-Spiegel (8a, 8b) aufweist,
- eine Lichtquelle (3), die außerhalb des Resonators (2) angeordnet und dazu eingerichtet ist, ein kohärentes und monochromatisches Anregungslicht (5) einer Wellenlänge λ_{A} zu erzeugen und in den Resonator (2) einzukoppeln, und
- wenigstens ein Detektor (7) zur Detektion des Sekundärlichts (6),
- wobei einer der beiden Resonator-Spiegel (8a, 8b) mit Hilfe eines ansteuerbaren Aktuators (19) aktiv verstellbar ist.

2. Optische Raman-Messanordnung (1) nach Anspruch 1,
- wobei die Raman-Messanordnung (1) ferner eine Fluidzelle (11), vorzugsweise in Form einer Küvette, zur Aufnahme des optisch zu vermessenden Fluids (4) umfasst, insbesondere:
- wobei die Fluidzelle (11) als separates Bauteil innerhalb des Resonators (2) so angeordnet ist, dass das im Resonator (2) hin- und herlaufende Anregungslicht (5) das Fluid (4) mehrfach durchläuft
oder
- wobei der Resonator (2), insbesondere die zwei Resonator-Spiegel (8a, 8b), innerhalb der Fluidzelle (11) so angeordnet ist, dass das im Resonator (2) hin- und herlaufende Anregungslicht (5) das Fluid (4) mehrfach durchläuft.

3. Optische Raman-Messanordnung (1) nach Anspruch 1 oder Anspruch 2,
- wobei die Messanordnung (1) einen Sensor (18) zum Messen einer Intensität des Anregungslichts (5) umfasst und
- wobei eine Rückkopplungsschleife (20) eingerichtet ist, die auf Basis eines Sensorsignals des Sensors (18) eine automatische Verstellung des Resonator-Spiegels (8a/8b) durch Ansteuern des Aktuators (19) bewirkt.

4. Optische Raman-Messanordnung (1) nach einem der vorhergehenden Ansprüche, wobei die Raman-Messanordnung (1) eine Fokussierlinse oder einen Fokussierspiegel umfasst, der/die dazu eingerichtet ist, das innerhalb des Resonators (2) hin- und herlaufende Anregungslicht (5) auf einen Fokusbereich (26) innerhalb des Resonators (2) zu fokussieren.

5. Optische Raman-Messanordnung (1) nach einem der vorhergehenden Ansprüche, wobei die Raman-Messanordnung (1) eine Auskoppeloptik (29) umfasst, die das Anregungslicht (5) aus dem Resonator (2) auskoppelt und zum Sensor (18) leitet,
- vorzugsweise wobei die Auskoppeloptik (29) ein optisches Filter (30) umfasst, welches das Sekundärlicht (6) vom Sensor (18) fernhält.

6. Optische Raman-Messanordnung (1) nach einem der vorhergehenden Ansprüche, wobei die Raman-Messanordnung (1) wenigstens eine Sammeloptik (9) umfasst, die innerhalb des Resonators (2) erzeugtes Sekundärlicht (6), insbesondere aus dem Fokusbereich (26), einsammelt und, insbesondere vermittelt über einen Lichtleiter (10), zu dem wenigstens einen Detektor (7) weiterleitet,
- vorzugsweise wobei die wenigstens eine Sammeloptik (9) ein Anregungslichtfilter (32) umfasst, welches das Anregungslicht (5) vom Detektor (7) fernhält.

7. Optische Raman-Messanordnung (1) nach dem vorausgehenden Anspruch, wobei die wenigstens eine Sammeloptik (9) das Sekundärlicht (6) in einer Richtung
- quer, insbesondere 90°, zu einer optischen Achse (28) des Resonators (2)
oder
- in Richtung der optischen Achse (28) des Resonators (2) einsammelt und/oder
- wobei die Sammeloptik (9) auf einen/den Fokusbereich (26) innerhalb des Resonators (2) ausgerichtet ist.

8. Optische Raman-Messanordnung (1) nach einem der vorhergehenden Ansprüche, wobei die Fluidzelle (11) so innerhalb des Resonators (2) angeordnet ist, dass die Fluidzelle (11) aus dem Resonator (2) entnehmbar und damit austauschbar ist,
- vorzugsweise wobei ein Justagemittel (27) zur Feinpositionierung der Fluidzelle (11) innerhalb des Resonators (2) ausgebildet sind.

9. Optische Raman-Messanordnung (1) nach einem der vorhergehenden Ansprüche, wobei die Lichtquelle (3) eine Laserlichtquelle ist, die über einen eigenen, separaten, optischen Laser-Resonator verfügt und/oder
- wobei der Aktuator (19) als
- Piezo-Aktuator oder als
- thermo-mechanischer Aktuator
ausgestaltet ist.

10. Optische Raman-Messanordnung (1) nach einem der vorhergehenden Ansprüche, wobei die Fluidzelle (11) ein optisches Eintrittsfenster (14) und ein optisches Austrittsfenster (15) aufweist, vorzugsweise die jeweils beabstandet von den Resonator-Spiegeln (8a, 8b) angeordnet sind,
- besonders bevorzugt, wobei die beiden Fenster (14, 15) der Fluidzelle (11), beispielsweise geometrisch oder mittels einer Antireflexionsschicht, so ausgestaltet sind, dass eine Reflexion von zumindest einer Polarisationsrichtung des Anregungslichts (5) am jeweiligen Fenster (14, 15) vermindert ist.

11. Optische Raman-Messanordnung (1) nach dem vorhergehenden Anspruch, wobei das Eintrittsfenster (14) und das Austrittsfenster (15) der Fluidzelle (11) jeweils als Brewster-Fenster ausgestaltet sind,
- insbesondere wobei das Eintrittsfenster (14) im Brewster-Winkel zu einem von der Lichtquelle (3) ausgesandten und in den optischen Resonator (2) einfallenden Lichtstrahl (16) und/oder das Austrittsfenster (15) im Brewster-Winkel zu einem im optischen Resonator (2) reflektierten Lichtstrahl (17) ausgerichtet ist/sind.

12. Optische Raman-Messanordnung (1) nach einem der vorhergehenden Ansprüche, wobei die Fluidzelle (11) einen Einlass (12) und einen mit dem Einlass (12) kommunizierenden Auslass (13) aufweist, sodass ein Strom des Fluids (4) die Fluidzelle (11) kontinuierlich durchströmen kann.

13. Optische Raman-Messanordnung (1) nach einem der vorhergehenden Ansprüche, wobei die Raman-Messanordnung (1) wenigstens einen, vorzugsweise sphärischen, optischen Reflektor (48) umfasst, welcher Sekundärlicht (6) in Richtung auf den wenigstens einen Detektor (7) zurückwirft.

14. **Verwendung einer optischen Raman-Messanordnung (1)** nach einem der vorhergehenden Ansprüche,
- zum zeitlich kontinuierlichen optischen Vermessen eines Fluidstroms, insbesondere in Form eines Bypassstroms, welcher durch die Fluidzelle (11) geleitet wird und/oder
- zum zeitlich diskontinuierlichen optischen Vermessen von Fluidproben, die, insbesondere mittels einer Förderpumpe (47), zeitweise in die Fluidzelle (11) eingebracht werden.

15. **Verfahren zum Durchführen einer optischen Raman-Messung** mit Hilfe einer optischen Messanordnung (1), vorzugsweise ausgestaltet gemäß einem der Ansprüche 1 bis 13, die einen optischen Resonator (2) mit zwei Resonator-Spiegeln (8a, 8b) sowie eine Lichtquelle (3) umfasst,
- wobei ein zu vermessendes Fluid (4) mittels Anregungslicht (5) optisch angeregt wird, welches von der Lichtquelle (3) bereitgestellt wird,
- wobei das Anregungslicht (5) innerhalb des optischen Resonators (2) in Resonanz gebracht wird, sodass sich eine stehende optische Welle aus Anregungslicht (5) innerhalb des Resonators (2) ausbildet, und
- wobei durch Verstellen von wenigstens einem der beiden Resonator-Spiegel (8a, 8b) mit Hilfe eines Aktuators (19) die optische Resonanz während der Messung aktiv stabilisiert wird, vorzugsweise auf Basis einer mit Hilfe eines Sensors (18) gemessenen Intensität des Anregungslichts (5) nach dessen Wechselwirkung mit dem optischen Resonator (2),
- insbesondere wobei das Fluid (4) in einer als separates Bauteil ausgestalteten Fluidzelle (11) vorgehalten wird,
- vorzugsweise wobei die Fluidzelle (11), insbesondere austauschbar, innerhalb eines Resonatorraums (33) des Resonators (2) angeordnet ist, der durch die beiden Resonator-Spiegel (8a, 8b) begrenzt ist.
